(19) Europäisches Patentamt
European Patent Office
Office européen des brevets

(11) Veröffentlichungsnummer: **0 032 187**
**B1**

(12) # EUROPÄISCHE PATENTSCHRIFT

(45) Veröffentlichungstag der Patentschrift: **21.12.83**

(51) Int. Cl.³: **C 09 B 62/08,** C 09 B 62/51, D 06 P 3/66, D 06 P 3/10

(21) Anmeldenummer: **80107444.4**

(22) Anmeldetag: **28.11.80**

(54) **Wasserlösliche Azoverbindungen, Verfahren zu ihrer Herstellung und ihre Verwendung als Farbstoffe.**

(30) Priorität: **06.12.79 DE 2949034**

(43) Veröffentlichungstag der Anmeldung: **22.07.81 Patentblatt 81/29**

(45) Bekanntmachung des Hinweises auf die Patenterteilung: **21.12.83 Patentblatt 83/51**

(84) Benannte Vertragsstaaten: **BE CH DE FR GB IT LI**

(56) Entgegenhaltungen: **CHEMICAL ABSTRACTS, Band 78, Nr. 24, 18. Juni 1973, Seite 52, Nr. 148950r, Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Otten, Joachim, Dr., Verstorben, Verstorben (DE)**

**EP 0 032 187 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Wasserlösliche Azoverbindungen, Verfahren zu ihrer Herstellung und ihre Verwendung als Farbstoffe

Die Erfindung liegt auf dem technischen Gebiet der faserreaktiven Farbstoffe.

Aus der deutschen Patentschrift 1 265 698 sind Azofarbstoffe bekannt, die einen faserreaktiven Rest aus der Vinylsulfonreihe und als einen weiteren faserreaktiven Rest einen Chlortriazinylrest enthalten. Die darin beschriebenen Farbstoffe besitzen jedoch gewisse Mängel, so daß sie heutigen Anforderungen nicht mehr vollauf genügen.

Mit der vorliegenden Erfindung wurden nunmehr neue Azoverbindungen gefunden, die, in Form der freien Säure geschrieben, der allgemeinen Formel (1)

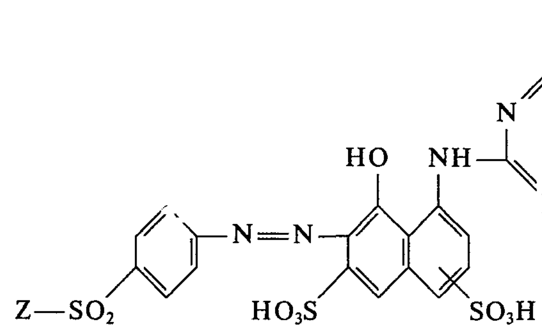

(1)

entsprechen. In dieser Formel (1) bedeuten:

Y ist ein Chloratom oder eine Gruppe der Formel

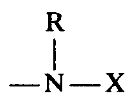

R ist ein Wasserstoffatom oder eine Alkylgruppe von 1–4 C-Atomen, wie die Äthylgruppe und vorzugsweise die Methylgruppe;

X ist eine Alkylgruppe von 1 bis 6 C-Atomen, insbesondere von 1 bis 4 C-Atomen, wie vorzugsweise die Methyl- oder Äthylgruppe, die durch eine Sulfonsäure- oder eine Carbonsäuregruppe substituiert ist, oder ist der Phenylrest, der durch eine oder zwei Sulfonsäure- und/oder Carbonsäuregruppen substituiert ist;

Z steht für die Vinylgruppe, bevorzugt für die β-Thiosulfatoäthyl-, insbesondere bevorzugt für die β-Sulfatoäthyl-Gruppe;

die zweite Sulfogruppe im Naphthalinrest steht in m- oder p-Stellung zur Aminogruppe, jedoch zwingend in p-Stellung, falls Y gleich Chlor ist.

Die neuen Azoverbindungen können sowohl in Form der freien Säure als auch in Form ihrer Salze vorliegen. Bevorzugt sind sie in Form der Salze, insbesondere neutralen Salze, wie beispielsweise ihrer Alkalimetall- und Erdalkalimetallsalze, so beispielsweise der Natrium-, Kalium- oder Calciumsalze. Sie finden bevorzugt in Form dieser Salze, insbesondere in Form der Alkalimetallsalze, Verwendung zum Färben (hier im allgemeinen Sinne, einschließlich Bedrucken) von hydroxy- und carbonamidgruppenhaltigem Material, insbesondere Fasermaterial, und von Leder.

In den Verbindungen der allgemeinen Formel (1) ist der Formelrest X bevorzugt die β-Sulfo-äthyl-, Carboxymethyl-, Monosulfophenyl-, 2,5-Disulfophenyl- und Monocarboxy-phenyl-Gruppe. Insbesondere ist in den Verbindungen der allgemeinen Formel (1) die Gruppierung der Formel –NR–X ein Rest der Formel

$-NH-CH_2-CH_2-SO_3H$

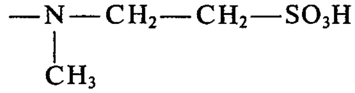

$-NH-CH_2-COOH$

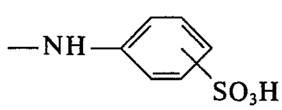

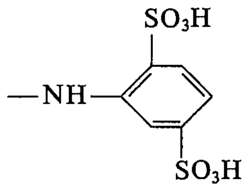 oder 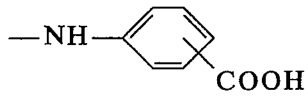

Technisch besonders interessante Vertreter der erfindungsgemäßen Azoverbindungen sind darüber hinaus solche der allgemeinen Formel (1), in welcher der Formelrest Y für die genannte Gruppe der Formel $-NR-X-$ steht, in welcher R die obengenannte Bedeutung hat und X für einen Sulfophenylrest steht und die zweite Sulfogruppe im Naphthalinrest in m-Stellung zur Aminogruppe gebunden ist.

Weiterhin sind bevorzugt die erfindungsgemäßen Azoverbindungen entsprechend der allgemeinen Formel (1a), in Form der freien Säure geschrieben,

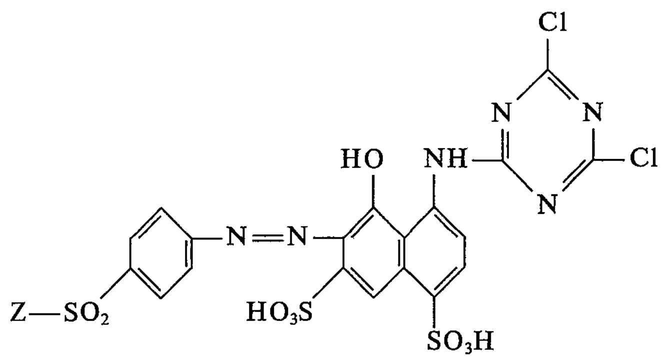

(1a)

in welcher Z die obengenannte Bedeutung besitzt. Diese Azoverbindungen der allgemeinen Formel (1a) sind sowohl als Farbstoffe zum Färben und Bedrucken von hydroxygruppenhaltigem oder von carbonamidgruppenhaltigem Fasermaterial als auch als Zwischenprodukte zur Herstellung von konstitutionell ähnlich aufgebauten Azofarbstoffen durch weitere Umsetzung mit einer Aminoverbindung, beispielsweise gemäß der vorliegenden Erfindung, geeignet. Besonders vorteilhaft eignen sie sich zum Färben der genannten Materialien in den üblichen Druckverfahren für faserreaktive Farbstoffe.

Die vorliegende Erfindung betrifft weiterhin ein Verfahren zur Herstellung dieser neuen Verbindungen der allgemeinen Formel (1) und ihrer Salze.

Sie lassen sich erfindungsgemäß herstellen, indem man eine Diazoniumverbindung eines Amins der allgemeinen Formel (2)

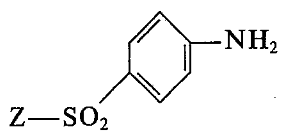

(2)

in welcher Z die obengenannte Bedeutung hat, mit einer Kupplungskomponente der allgemeinen Formel (3)

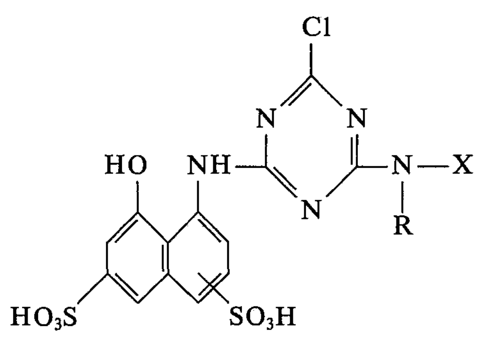

(3)

in welcher R und X die obengenannten Bedeutungen haben und die zweite Sulfogruppe im Naphthalinrest in m- oder p-Stellung zur acylierten Aminogruppe steht, kuppelt,
oder indem man eine Diazoniumverbindung der obengenannten und definierten allgemeinen Formel (2)

mit einer Verbindung der allgemeinen Formel (4)

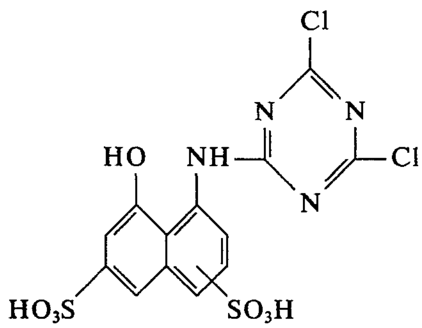

(4)

in welcher die zweite Sulfogruppe im Naphthalinrest in der angegebenen m- oder p-Stellung oder der zwingend erforderlichen p-Stellung steht, kuppelt und die so hergestellte Azoverbindung der nachstehenden allgemeinen Formel (6) gegebenenfalls mit einem primären oder sekundären Amin der allgemeinen Formel (5)

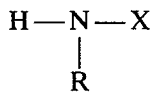

(5)

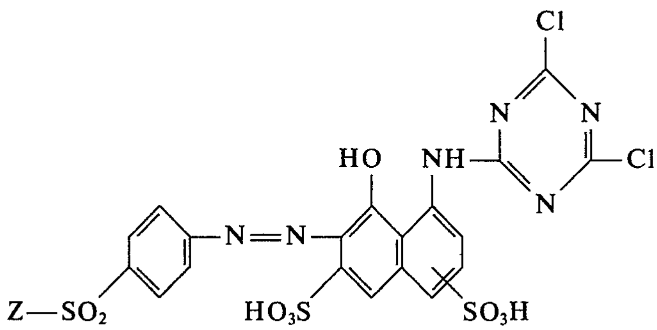

(6)

in welchen R, X und Z die obengenannten Bedeutungen haben und die zweite Sulfogruppe in m- oder p-Stellung steht, umsetzt. Verbindungen der allgemeinen Formel (1), in denen Z für den β-Thiosulfatorest steht, können auch in der Weise erfindungsgemäß hergestellt werden, daß man eine Verbindung der allgemeinen Formel (1), in welcher Z für den Vinylrest steht, nach an und für sich bekannter Verfahrensweise mit dem Salz der Thioschwefelsäure, wie beispielsweise mit Natriumthiosulfat, umsetzt, wobei man vorzugsweise in wäßriger Lösung und bei einem pH-Wert von 4 bis 6,5 und einer Temperatur von 10 bis 40° C arbeitet.

Die Diazotierung des aromatischen Amins der allgemeinen Formel (2) kann analog bekannten und an und für sich üblichen Verfahrensweisen durchgeführt werden; zu beachten ist, daß das aromatische Amin als Ausgangsverbindung oder deren Diazoniumverbindung keinen stärker alkalischen Bedingungen unterzogen werden, um eine Schädigung der faserreaktiven Gruppe zu vermeiden; vorteilhaft hält man den pH-Wert des Mediums, in welchem diese Verbindungen gelöst oder suspendiert sind, unterhalb von 7,5. — Die Kupplungsreaktion des diazotierten Amins der allgemeinen Formel (2) mit einer Verbindung der allgemeinen Formel (3) oder (4) kann ebenso nach bekannten Methoden der Kupplungsreaktion von diazotierten Anilinen mit Acylamino-naphtholen erfolgen. Auch hier vermeidet man alkalische Bedingungen; bevorzugt erfolgt die Kupplung in einem pH-Bereich zwischen 4 und 7 und bei einer Temperatur zwischen −5° C und +30° C.

Die Kupplungskomponenten der allgemeinen Formel (4) können analog zu Verfahrensweisen, wie sie beispielsweise in W. F. Beech, Fibre-Reactive Dyes, London (1970), Seite 152, oder K. Venkataraman, Synthetic Dyes, Band VI, New York (1972), Seite 262, in der britischen Patentschrift 785 222 oder in der deutschen Patentschrift 1 062 367 beschrieben sind, durch Umsetzung der 1-Amino-8-naphthol-3,6- oder -4,6-disulfonsäure mit Cyanurchlorid hergestellt werden.

Die Synthese der Kupplungskomponenten der allgemeinen Formel (3) kann durch Umsetzung einer Verbindung der allgemeinen Formel (4) mit einer Verbindung der allgemeinen Formel (5) analog zu bekannten und an und für sich üblichen Verfahrensweisen der Umsetzung einer Aminoverbindung mit einem Dichlortriazin durchgeführt werden, so beispielsweise in wäßrigem Medium bei einer Temperatur zwischen 5 und 70° C, vorzugsweise zwischen 20 und 40° C, und einem pH-Wert zwischen 3 und 7,5, vorzugsweise 4 und 7.

In ähnlicher oder gleicher Weise kann die erfindungsgemäße Umsetzung der Azoverbindung der

allgemeinen Formel (6) mit dem Amin der allgemeinen Formel (5) erfolgen. Auch hier arbeitet man bevorzugt in wäßrigem Medium bei einer Temperatur zwischen 10 und 80°C, vorzugsweise zwischen 20 und 60°C, und einem pH-Wert zwischen 3 und 7, vorzugsweise 4 und 7.

Die Abscheidung der erfindungsgemäß hergestellten Verbindungen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann.

Die neuen erfindungsgemäßen Verbindungen der allgemeinen Formeln (1) haben faserreaktive Eigenschaften und besitzen sehr gute Farbstoffeigenschaften. Sie können deshalb zum Färben der anfangs genannten Materialien verwendet werden. So können auch die bei der Synthese der erfindungsgemäßen Verbindungen anfallenden Lösungen, gegebenenfalls nach Zusatz einer Puffersubstanz, gegebenenfalls nach Konzentrierung, direkt als Flüssigpräparation der färberischen Verwendung zugeführt werden.

Gegenstand der vorliegenden Erfindung ist deshalb auch die Verwendung der erfindungsgemäßen Azoverbindungen der allgemeinen Formeln (1) zum Färben von hydroxy- und carbonamidgruppenhaltigen Materialien bzw. Verfahren zu deren Anwendung auf diesen Substraten. Eingeschlossen sind hierbei die Massefärbung, beispielsweise Folien aus Polyamid, und die Druckfärbung. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und viskose Kunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Farbstoffe lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenfalls neutralen Salzen, wie Natriumchlorid oder Natriumsulfat, sehr gute Farbausbeuten sowie einen ausgezeichneten Farbaufbau. Man färbt bei Temperaturen zwischen 20 und 105°C, gegebenenfalls bei Temperaturen bis zu 120 C unter Druck, gegebenenfalls in Gegenwart von üblichen Färbereihilfsmitteln, in wäßrigem Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefaser ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder einem anderen säurebindenden Mittel in der Druckpaste und durch anschließendes Dämpfen bei 100 bis 103°C, oder zweiphasig, beispielsweise mit neutraler oder schwach saurer Druckfarbe bedruckt und dann entweder durch Hindurchführen durch ein heißes elektrolythaltiges alkalisches Bad oder durch Überklotzen mit einer alkalischen elektrolythaltigen Klotzflotte und anschließendem Verweilen dieses behandelten Materials oder anschließendem Dämpfen oder anschließender Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur sehr wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der 3fach molaren Menge einer Aminobenzolsulfonsäure und/oder einer Aminonaphthalinsulfonsäure und/oder auf Basis eines Umsetzungsproduktes von beispielsweise Stearylamin mit Äthylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

In der Regel werden die hydroxygruppenhaltigen und/oder carbonamidgruppenhaltigen Fasermaterialien mit den erfindungsgemäßen Verbindungen der allgemeinen Formel (1) bei Temperaturen zwischen 60 und 105°C oder, falls erwünscht, auch bei Temperaturen bis zu 120°C gefärbt, sofern nicht zur Fixierung des Farbstoffes ein anderes Verfahren, wie die Fixierung mit überhitztem Wasserdampf oder mit Trockenhitze, angewendet wird. Auch die Fixierung des Farbstoffes in den Druckverfahren kann nach einer der obenerwähnten Fixiermethoden bei Temperaturen zwischen 60 und 120°C als bevorzugten Temperaturbereich erfolgen. Die Verbindungen der allgemeinen Formel (1), in welcher Y für den Formelrest $-NR-X$ steht, werden bevorzugt in den Färbe- und Druckverfahren bei einem der oben angegebenen Temperaturen oder Temperaturbereiche von oberhalb 60°C fixiert. Die erfindungsgemäßen Verbindungen der allgemeinen Formel (1a) zeigen dagegen eine erhöhte Faserreaktivität, so daß sie bereits vorteilhaft bei Temperaturen zwischen 20 und 60°C auf den Fasermaterialien fixiert werden können; dies schließt natürlich nicht aus, daß sie auch vorteilhaft in Applikations- und Fixierverfahren eingesetzt werden können, die bei Temperaturen oberhalb von 60°C arbeiten.

Die mit den erfindungsgemäßen Verbindungen der allgemeinen Formel (1) hergestellten Färbungen und Drucke zeichnen sich durch sehr klare Nuancen aus. Insbesondere die Färbungen und Drucke auf Cellulosefasermaterialien besitzen eine hohe Farbstärke, wie bereits erwähnt, darüber hinaus eine gute Lichtechtheit und gute Naßechtheiten, wie Wasch-, Walk-, Wasser-, Seewasser-, Überfärbe-, Naßlicht-, saure und alkalische Schweiß- sowie saure und alkalische Schweißlichtechtheiten, des weiteren eine gute Plissierechtheit, Bügelechtheit und Reibechtheit sowie eine hohe Dampfbeständigkeit. Zudem zeigen sie sehr echte Eigenschaften bezüglich eines Ausblutens im feuchten oder nassen Zustand und bezüglich eines Abfleckens oder Anblutens von Begleitgewebe oder beiliegendem Gewebe, beispielsweise im Druck. Fixierte Färbungen können im nassen Zustand unbedenklich, ohne Veränderung des Farbtons, aufeinander liegend gelagert werden.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.

## Beispiel 1

281 Teile 4-$\beta$-Sulfatoäthylsulfonyl-anilin werden in 1000 Teilen Wasser eingetragen und durch vorsichtige Zugabe von 65 Teilen Natriumcarbonat in Lösung gebracht, wobei sich der pH-Wert auf 6,5 bis 7,0 einstellt. Man läßt 2 Stunden bei diesem pH weiterrühren, gibt sodann 750 Teile Eis und 255 Teile einer 31%igen wäßrigen Salzsäure hinzu; anschließend läßt man 173 Teile der 40%igen wäßrigen Natriumnitritlösung einlaufen, rührt bei 0 bis 5°C weitere 2 Stunden nach und zerstört sodann überschüssige salpetrige Säure mittels Amidosulfonsäure. In die so hergestellte Diazoniumsalzsuspension läßt man bei einem pH-Wert von 6,0 bis 6,5 unter gleichzeitigem Eintragen von etwa 70 Teilen Natriumcarbonat die Lösung des sekundären Kondensationsproduktes von je einem Mol Cyanurchlorid und 1-Amino-8-naphthol-3,6-disulfonsäure und Anilin-3-sulfonsäure einlaufen. Diese Lösung des sekundären Kondensationsproduktes wird wie folgt hergestellt: 319 Teile 1-Amino-8-naphthol-3,6-disulfonsäure werden unter Rühren in ein Gemisch aus 500 Teilen Wasser und 121 Teilen einer 33%igen Natronlauge eingetragen; der pH-Wert der Lösung soll anschließend 6,5 bis 7,0 betragen. Diese Lösung läßt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5°C und bei dem angegebenen pH-Wert, der durch Einstreuen von 92 Teilen

Natriumbicarbonat gehalten wird, weitergerührt. In die so erhaltene klare Lösung trägt man 173 Teile Anilin-3-sulfonsäure ein und danach innerhalb einer Stunde 115 Teile Natriumcarbonat, wobei sich der pH-Wert auf 6,5 bis 7,0 erhöht. Bei diesem pH-Wert läßt man noch 2 Stunden nachrühren, wobei die Temperatur auf 15 bis 20° C gehalten wird.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionsweises Einstreuen von 70 Teilen Natriumcarbonat ein pH-Wert von 6,0 bis 6,5 gehalten wird. Nach beendeter Kupplung wird auf 50° C erwärmt, 40 Teile Kieselgur werden zugegeben, die Lösung geklärt (filtriert), das Filtrat gegebenenfalls mit 50 Teilen Dinatriumphosphat versetzt und sprühgetrocknet.

Es wird ein rotes, elektrolythaltiges und gegebenenfalls die erwähnte Puffersubstanz enthaltendes Pulver erhalten, das das Alkalimetallsalz, insbesondere Natriumsalz der Verbindung der Formel

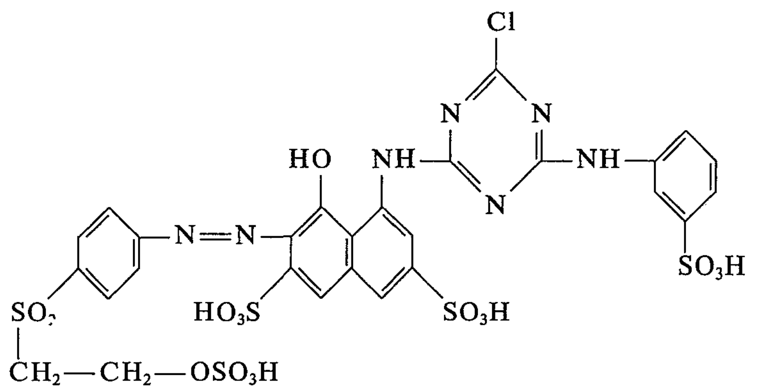

enthält. Diese Verbindung besitzt sehr gute Farbstoffeigenschaften; sie färbt die in der Beschreibung genannten Materialien, insbesondere Wolle aus saurem Bad oder Cellulosefasermaterialien in Gegenwart von säurebindenden Mitteln nach den in der Technik üblichen Applikations- und Fixiermethoden für faserreaktive Farbstoffe, in klaren roten Tönen mit sehr gutem Farbaufbau und hohem Fixiergrad. Die Färbungen besitzen sehr gute Naßechtheiten, wie beispielsweise eine ausgezeichnete Waschechtheit, sowie eine hohe Dampfbeständigkeit und sehr gute Reibechtheit, ebenso sehr echte Eigenschaften bezüglich eines Ausblutens oder Abfleckens auf beiliegendem Geweben.

Beispiel 2

Es wird eine neutrale wäßrige Lösung mit einem pH-Wert von 6,5 aus 297 Teilen 4-β-Thiosulfatoäthylsulfonyl-anilin in 1000 Teilen Wasser hergestellt. Anschließend gibt man etwa 600 Teile Eis hinzu, des weiteren langsam unter Rühren etwa 200 Teile einer konzentrierten wäßrigen Salzsäure, bis ein pH-Wert von 2 erreicht ist. Sodann läßt man 173 Teile einer wäßrigen 40%igen Natriumnitritlösung bei einer Temperatur von 0 bis 5° C einlaufen, rührt eine Stunde nach und zerstört überschüssige salpetrige Säure mittels Amidosulfonsäure. Diese erhaltene Diazoniumsalzsuspension wird mit der wäßrigen Lösung des sekundären Kondensationsproduktes von je einem Mol Cyanurchlorid und 1-Amino-8-naphthol-3,6-disulfonsäure und Anilin-3-sulfonsäure gekuppelt, wobei man gemäß der in Beispiel 1 beschriebenen Verfahrensweise vorgeht. Nach Beendigung der Kupplungsreaktion, Klärung und Isolierung des Farbstoffes, beispielsweise durch Sprühtrocknung oder Aussalzen mit Natriumchlorid, erhält man ein rotes elektrolythaltiges Pulver mit dem

entsprechenden Alkalimetallsalz der Verbindung der Formel

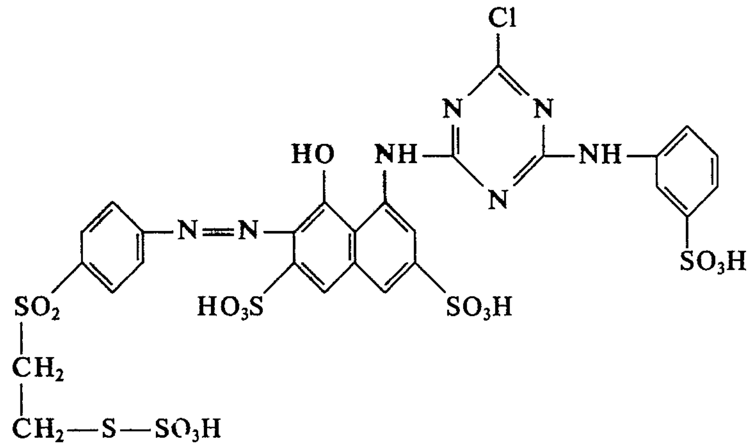

Diese Verbindung besitzt ebenso sehr gute Farbstoffeigenschaften und färbt Polyamidfasermaterialien, wie insbesondere Wolle, und Cellulosefasermaterialien nach den üblichen Färbe- und Fixiermethoden für Farbstoffe, die eine faserreaktive Gruppe, insbesondere die β-Thiosulfatoäthylsulfonyl-Gruppe, besitzen, in klaren roten Tönen mit sehr guten Naßechtheiten, wie sie beispielsweise für den Farbstoff des Beispiels 1 genannt sind.

Beispiel 3

195 Teile Cyanurchlorid werden in 800 Volumenteilen Aceton gelöst; unter gutem Rühren gibt man diese Lösung in eine Mischung von 1300 Teilen Wasser und 1300 Teilen zerstoßenem Eis sowie 20 Volumenteilen einer 2n-Salzsäure. Zu dieser so erhaltenen Suspension läßt man innerhalb von 50 bis 60 Minuten unter Rühren eine Lösung mit einem pH-Wert von 6,9 bis 7,2 aus 319 Teilen 1-Amino-8-naphthol-4,6-disulfonsäure, 65 Teilen Natriumcarbonat und 2000 Teilen Wasser einlaufen. Die Umsetzung des Cyanurchlorids mit dem Aminonaphthol wird bei einer Temperatur zwischen 0 und 5°C und einem pH-Wert von 3 bis 5 durchgeführt. Es wird so lange gerührt, bis kein freies Amin mehr durch eine Diazotierungsprobe nachweisbar ist.

Die so hergestellte Lösung der Kupplungskomponente wird mit einer gemäß Beispiel 1 hergestellten Diazoniumsalzsuspension versetzt. Man rührt 2 Stunden lang und erhöht in dieser Zeit durch portionsweises Einstreuen von Natriumcarbonat den pH-Wert auf 6,5 bis 7,0. Es wird noch eine Stunde bei diesem pH-Wert und bei Raumtemperatur weitergerührt. Anschließend gibt man 173 Teile Anilin-4-sulfonsäure und portionsweise etwa 110 Teile Natriumcarbonat hinzu, um den pH-Wert auf 5,0 bis 6,0 zu halten. Diese Reaktionslösung wird auf 50°C erwärmt und unter Rühren bei dieser Temperatur eine Stunde gehalten. Nach dem Abkühlen der Reaktionslösung wird die gebildete Azoverbindung mittels Natriumchlorid ausgefällt, abgesaugt und bei 60°C unter reduziertem Druck getrocknet. Es wird ein rotes, elektrolythaltiges Pulver erhalten, das das Natriumsalz der Verbindung der Formel

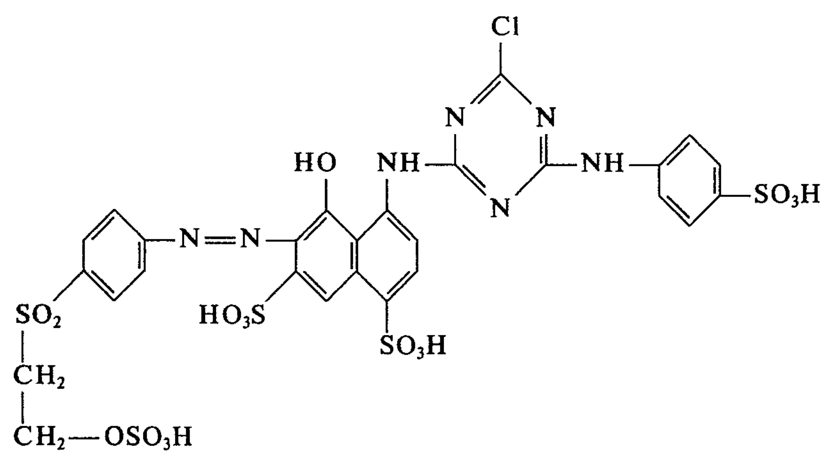

enthält. Diese Azoverbindung eignet sich hervorragend als Farbstoff. In Folge seiner faserreaktiven Eigenschaften liefert er beispielsweise aus wäßrig-alkalischer Flotte nach einem üblichen Auszieh-oder Klotzverfahren farbtiefe, rote Färbungen auf Baumwollfasern. Die Färbungen besitzen sehr gute Wasch- und Lichtechtheiten.

## Beispiel 4

Es wird die folgende Lösung einer Kupplungskomponente hergestellt: Eine Lösung aus 195 Teilen Cyanurchlorid in 800 Volumenteilen Aceton wird mit einer Mischung aus 1200 Teilen Wasser, 1200 Teilen zerstoßenem Eis und 20 Volumenteilen einer wäßrigen 2n-Salzsäure vermischt. Innerhalb von 50 bis 60 Minuten läßt man zu dieser Suspension eine Lösung mit einem pH-Wert von etwa 7 aus 319 Teilen 1-Amino-8-naphthol-3,6-disulfonsäure, 65 Teilen Natriumcarbonat und 2000 Teilen Wasser einlaufen. Die Kondensationsreaktion erfolgt bei einer Temperatur zwischen 0 und 5°C und einem pH-Wert zwischen 3 und 5. Es wird so lange gerührt, bis kein freies Amin mehr durch eine Diazotierungsprobe nachweisbar ist.

Es wird eine Diazoniumsalzsuspension hergestellt, indem man 190 Teile 4-Vinylsulfonyl-anilin in 500 Teilen Wasser und 300 Teilen einer wäßrigen konzentrierten Salzsäure einrührt. Durch Zugabe von Eis stellt man die Suspension dieses Anilin-hydrochlorids auf eine Temperatur von etwa 0°C und läßt sodann langsam 173 Teile einer wäßrigen 40%igen Natriumnitritlösung hinzulaufen, wobei die Temperatur bei 0 bis 5°C gehalten wird. Man rührt noch 2 Stunden bei dieser Temperatur nach und zerstört sodann überschüssiges Nitrit mittels Amidosulfonsäure.

Die so hergestellte Diazoniumsalzsuspension gibt man zu der Lösung der Kupplungskomponente. Unter weiterem Rühren setzt man portionsweise innerhalb von etwa 2 Stunden langsam Natriumcarbonat hinzu, bis ein pH-Wert von 6,5 bis 7,0 erhalten wird, den man unter weiterem Rühren von einer Stunde bei Raumtemperatur hält. Anschließend gibt man 173 Teile Anilin-3-sulfonsäure und portionsweise etwa 110 Teile Natriumcarbonat hinzu, um den pH-Wert bei der eintretenden Kondensationsreaktion der Anilinsulfonsäure mit der Dichlortriazinyl-Verbindung auf 5 bis 6 zu halten. Das Reaktionsgemisch wird auf 50°C erwärmt und noch eine Stunde bei dieser Temperatur gerührt und sodann sprühgetrocknet. Man erhält ein rotes, elektrolythaltiges Pulver, das das Alkalimetallsalz, vorwiegend Natriumsalz, der Verbindung der Formel

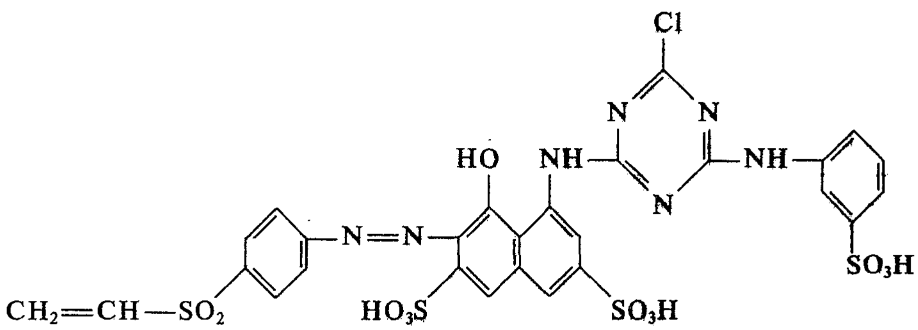

enthält. Diese Azoverbindung besitzt ebenfalls sehr gute Farbstoffeigenschaften und färbt insbesondere Cellulosefasermaterialien nach den für Reaktivfarbstoffe üblichen Applikations- und Fixiermethoden in kräftigen roten Tönen mit sehr guten Naßechtheiten, die denen des Farbstoffes des Beispieles 1 entsprechen.

## Beispiele 5 bis 11

Weitere erfindungsgemäße Azoverbindungen der allgemeinen Formel (1), die hervorragend als Farbstoffe geeignet sind, können nach einem der erfindungsgemäßen Verfahrensweisen, beispielsweise nach den in den obigen Ausführungsbeispielen niedergelegten Varianten, hergestellt werden. Sie färben Materialien, insbesondere Fasermaterialien aus natürlichem oder synthetischem Polyamid oder natürliche oder regenerierte Cellulosefaser in den in der nachstehenden Tabelle für diese Farbstoffe angegebenen Farbtönen mit hoher Farbstärke; die Licht- und Naßechtheiten, die mit ihnen hergestellten Färbungen und Drucke besitzen, sind ebenfalls gut. — Die erfindungsgemäßen Verbindungen der allgemeinen Formel (1), die in den nachstehenden Tabellenbeispielen angegeben sind, sind durch den Formelrest —Y und durch die Angabe der Stellung der 2. Sulfogruppe im Naphthalinrest in m- oder p-Stellung zum Acylaminorest gemäß der nachstehenden allgemeinen Formel (7) charakterisiert:

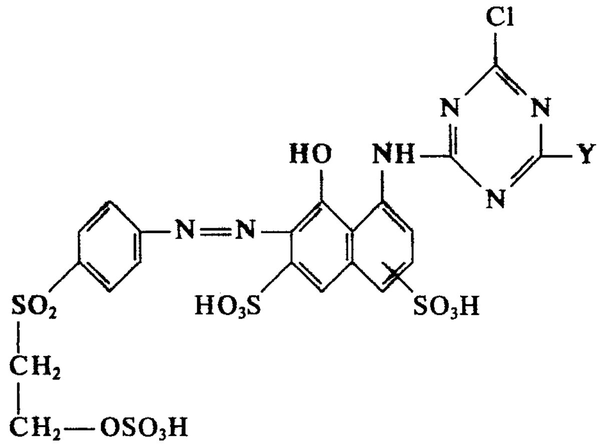

(7)

| Beispiel | mit –Y gleich | mit –$SO_3H$ in | Farbton der Färbung |
|---|---|---|---|
| 5 | 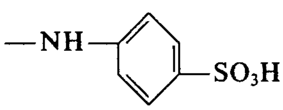 | m-Stellung | blaustichigrot |
| 6 | 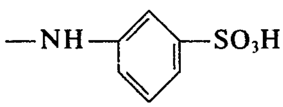 | p-Stellung | rot |
| 7 | 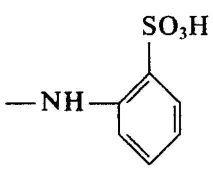 | p-Stellung | rot |
| 8 | 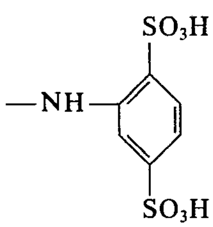 | m-Stellung | blaustichigrot |
| 9 | 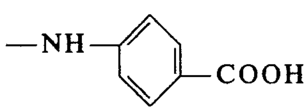 | m-Stellung | blaustichigrot |
| 10 | $-N-CH_2-CH_2-SO_3H$<br>$CH_3$ | p-Stellung | rot |
| 11 | $-NH-CH_2-COOH$ | p-Stellung | rot |

Beispiel 12

Zur Herstellung der erfindungsgemäßen Verbindung entsprechend der allgemeinen Formel (1a), in welcher Z für den $\beta$-Sulfatoäthyl-Rest steht, wird gemäß den Angaben des Beispieles 3 durch Diazotierung von 4-($\beta$-Sulfatoäthylsulfonyl)-anilin und Kupplung der gemäß Beispiel 3 hergestellten 1-Dichlortriazinylamino-8-naphthol-4,6-disulfonsäure verfahren. Nach Beendigung der Kupplung wird die gebildete Azoverbindung entsprechend der allgemeinen Formel (1a) mit Z der $\beta$-Sulfatoäthyl-Gruppe mit 1100 Teilen Natriumchlorid ausgesalzen, abfiltriert und bei 40°C im Vakuumschrank

getrocknet. Nach dem Mahlen wird ein rotes Pulver erhalten, das, neben Natriumchlorid das Natriumsalz der Verbindung der Formel

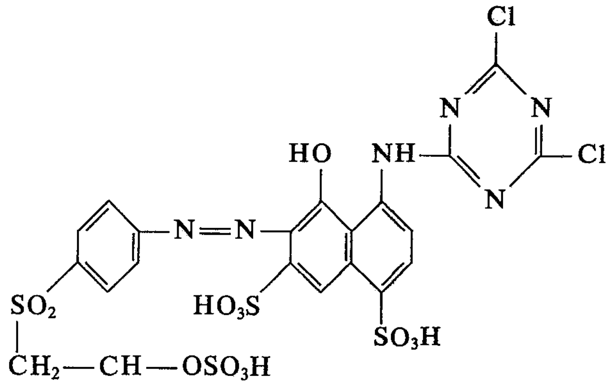

enthält. Diese Dichlortriazinylaminonaphthol-Azoverbindung besitzt sehr gute Farbstoffeigenschaften und färbt beispielsweise Cellulosefasermaterialien nach den üblichen Färbe- und Druckverfahren für faserreaktive Farbstoffe in klaren, gelbstichig roten Tönen mit sehr guten Naßechtheitseigenschaften und guter Lichtechtheit und Naßlichtechtheit.

Beispiel 13

Zur Herstellung der erfindungsgemäßen Verbindung entsprechend der allgemeinen Formel (1a), in welcher Z für den $\beta$-Thiosulfatoäthyl-Rest steht, kann ebenfalls analog der Verfahrensweise des Beispieles 3 verfahren werden. Anstelle des 4-($\beta$-Sulfatoäthylsulfonyl)-anilins geht man von 297 Teilen 4-($\beta$-Thiosulfatoäthylsulfonyl)-anilin aus, das gemäß den Angaben des Beispieles 2 diazotiert werden kann. Nach beendeter Kupplung aus Ausfällung der Azoverbindung mit Natriumchlorid und deren Isolierung erhält man ein salzhaltiges Farbstoffpulver, das das Natriumsalz der Verbindung der Formel

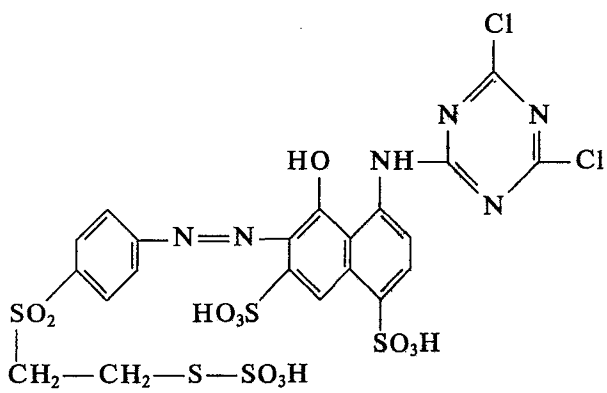

enthält. Diese Azoverbindung besitzt ebenfalls ausgezeichnete Farbstoffeigenschaften, und sie eignet sich beispielsweise zur Herstellung von Färbungen und Drucken auf Baumwoll- und Zellwollmaterialien, auf denen sie kräftige gelbstichig rote Farbtöne mit guter Lichtechtheit und mit guten Naßechtheitseigenschaften, wie insbesondere einer guten Naßlichtechtheit und guten alkalischen und sauren Schweißlichtechtheiten, liefert.

Beispiel 14

Zur Herstellung der erfindungsgemäßen Vinylsulfonylverbindung entsprechend der allgemeinen Formel (1a) verfährt man analog der Verfahrensweise des Beispieles 3 unter Verwendung von 190 Teilen 4-Vinylsulfonyl-anilin als Diazokomponente. Nach beendeter Kupplung und Isolierung erhält

man ein Farbstoffpulver, das neben Elektrolyt (Natriumchlorid) das Natriumsalz der Verbindung der Formel

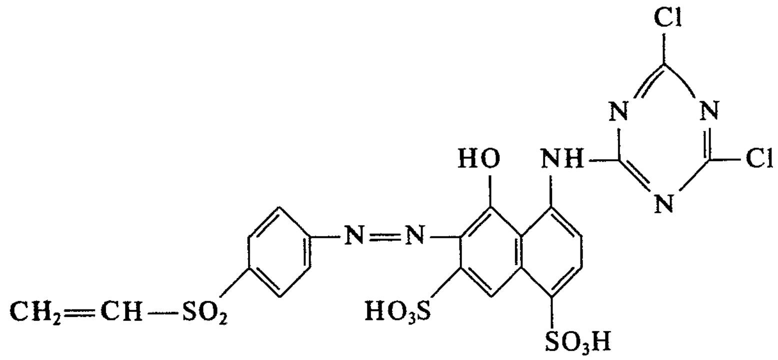

enthält. Diese zeigt ebenfalls sehr gute Farbstoffeigenschaften und liefert nach üblichen Färbe- und Druckverfahren Färbungen und Drucke, beispielsweise auf Cellulosefasermaterialien, von kräftiger, gelbstichig roter Nuance mit sehr guten Naßechtheiten, einer guten Lichtechtheit und einer guten Naßlichtechtheit.

Beispiel 15

5 Teile der erfindungsgemäßen Azoverbindung von Beispiel 12 werden zusammen mit 50 Teilen Harnstoff in 200 Teilen heißem Wasser gelöst. In diese Lösung werden 400 Teile einer 4%igen wäßrigen Alginatverdickung und 20 Teile Natriumbicarbonat eingerührt; sodann wird die Mischung mit Wasser oder mit weiterer Verdickung auf 1000 Teile eingestellt und gut durchmischt.

Mit der so hergestellten Druckpaste wird ein Gewebe aus mercerisierter Baumwolle bedruckt, das, nach dem Trocknen, fünf Minuten lang bei einer Temperatur von 101 bis 103°C gedämpft wird. Anschließend wird es in üblicher Weise durch Spülen mit kaltem und heißem Wasser, durch kochendes Seifen, durch erneutes Spülen mit Wasser und Trocknen fertiggestellt. Man erhält einen gelbstichig roten Druck, der sehr gute Naßechtheitseigenschaften und eine gute Lichtechtheit, einschließlich einer guten Naßlichtechtheit, aufweist.

Bedruckt man mit dieser Druckpaste ein Gewebe aus Zellwolle und fixiert den Farbstoff in der in diesem Beispiel angegebenen Weise, so erhält man ebenfalls einen Druck, der im Farbton und in der Farbtiefe von denen, die auf dem Baumwollgewebe erhalten werden, kaum abweicht. Auch der Druck auf Zellwolle zeigt die angegebenen guten Echtheiten.

Beispiel 16

Zur Färbung eines Wollkammgarnes bereitet man ein Färbebad, das aus 100 Teilen Wasser, 4 Volumenteilen einer wäßrigen, 60%igen Essigsäurelösung und 25 Volumenteilen einer Farbstofflösung, die durch Lösen von 1,25 Teilen der Vinylsulfonyl-Azoverbindung des Beispieles 14 in 25 Teilen heißem Wasser erhalten wird, zusammengesetzt ist. In 3500 Volumenteilen solch eines Färbebades werden bei 60°C 100 Teile des Wollkammgarnes eingegeben. Das Bad wird sodann auf 95°C erwärmt, und die Färbung wird sodann bei 95 bis 98°C und bei einem pH-Wert von 5 eine Stunde lang weitergeführt. Danach wird das gefärbte Garn herausgenommen, in üblicher Weise mit Wasser gespült und getrocknet. Es wird eine gelbstichig rote Färbung erhalten, die eine sehr gute Waschechtheit aufweist.

**Patentansprüche**

1. Azoverbindungen, die, in Form der freien Säure geschrieben, die allgemeine Formel (1)

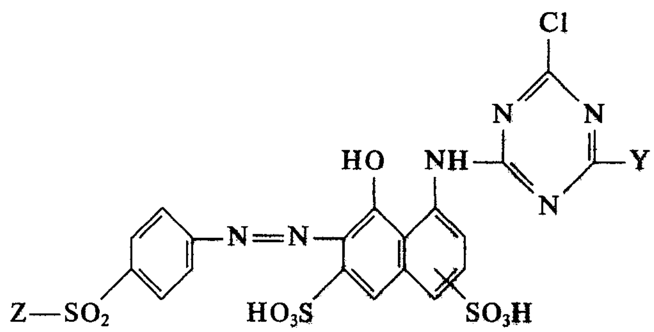

(1)

besitzen, in welcher

Y für ein Chloratom oder einen Rest der Formel

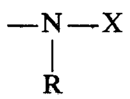

steht, worin

R ein Wasserstoffatom oder eine Alkylgruppe von 1 bis 4 C-Atomen bedeutet und X eine Alkylgruppe von 1 bis 6 C-Atomen darstellt, die durch eine Carbonsäuregruppe oder Sulfonsäuregruppe substituiert ist, oder für den Phenylrest steht, der durch eine oder zwei Sulfonsäure- und/oder Carbonsäuregruppen substituiert ist, und

Z für die Vinyl-, β-Thiosulfatoäthyl- oder β-Sulfatoäthyl-Gruppe steht

und in welcher die zweite Sulfonsäuregruppe im Naphthalinrest in m- oder p-Stellung zur Aminogruppe gebunden ist, wobei diese Sulfogruppe zwingend in p-Stellung steht, falls Y gleich Chlor ist.

2. Verfahren zur Herstellung der in Anspruch 1 genannten und definierten Verbindungen der allgemeinen Formel (1) und ihrer Salze, dadurch gekennzeichnet, daß man die Diazoniumverbindung eines Amins der allgemeinen Formel (2)

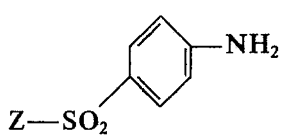

(2)

in welcher Z die in Anspruch 1 genannte Bedeutung hat, mit einer Verbindung der allgemeinen Formel (3)

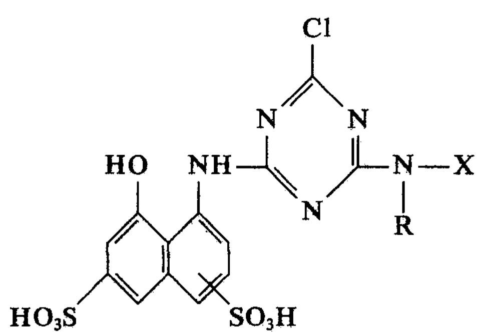

(3)

in welcher R und X die in Anspruch 1 genannten Bedeutungen haben und die zweite Sulfonsäuregruppe im Naphthalinrest in m- oder p-Stellung zur Aminogruppe steht, kuppelt,
oder daß man die Diazoniumverbindung eines Amins der obengenannten und definierten allgemeinen Formel (2) mit einer Verbindung der allgemeinen Formel (4)

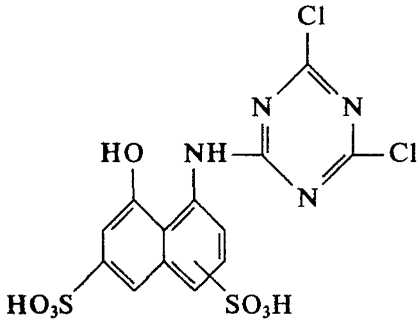

(4)

in welcher die zweite Sulfonsäuregruppe im Naphthalinrest in m- oder p-Stellung, falls zwingend in p-Stellung, zur Aminogruppe steht, kuppelt und die Azoverbindung der allgemeinen Formel (6)

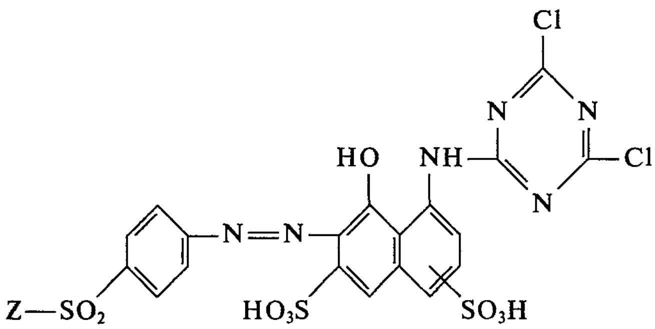

(6)

in welcher Z die in Anspruch 1 genannte Bedeutung hat und die zweite Sulfonsäuregruppe im Naphthalinrest in der angegebenen Stellung zur Aminogruppe steht, gegebenenfalls mit einem primären oder sekundären Amin der allgemeinen Formel (5)

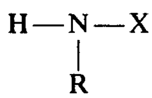

(5)

in welcher R und X die in Anspruch 1 genannten Bedeutungen haben, umsetzt.

3. Verfahren zur Herstellung der in Anspruch 1 genannten Verbindungen der allgemeinen Formel (1), in welcher R und X die in Anspruch 1 genannten Bedeutungen haben, Z für die $\beta$-Thiosulfatoäthyl-Gruppe steht und die zweite Sulfonsäuregruppe im Naphthalinrest in m- oder p-Stellung zur Aminogruppe gebunden ist, dadurch gekennzeichnet, daß man eine Verbindung der allgemeinen Formel (1) mit Z gleich der Vinylgruppe mit dem Salz der Thioschwefelsäure umsetzt.

4. Azoverbindung nach Anspruch 1 der Formel (in Form der freien Säure geschrieben)

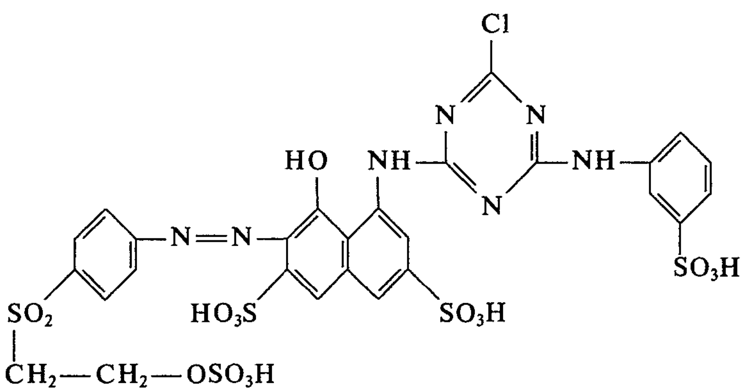

5. Azoverbindung nach Anspruch 1 der Formel (in Form der freien Säure geschrieben)

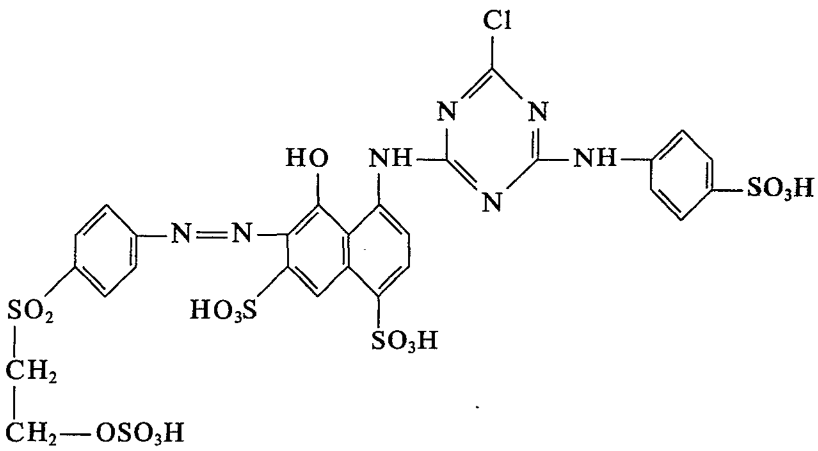

6. Azoverbindung nach Anspruch 1 der Formel (in Form der freien Säure geschrieben)

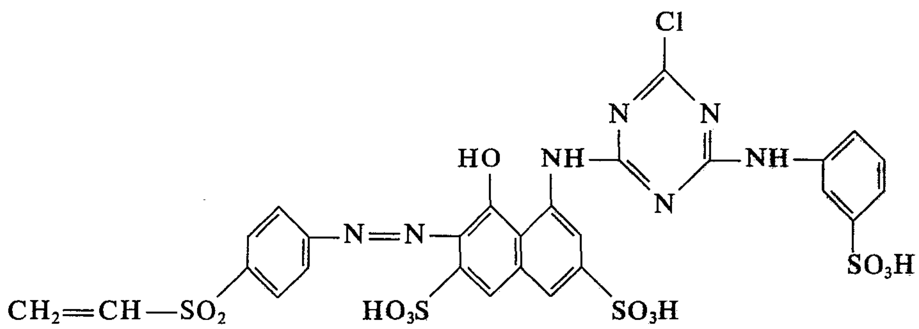

7. Azoverbindung nach Anspruch 1 der Formel (in Form der freien Säure geschrieben)

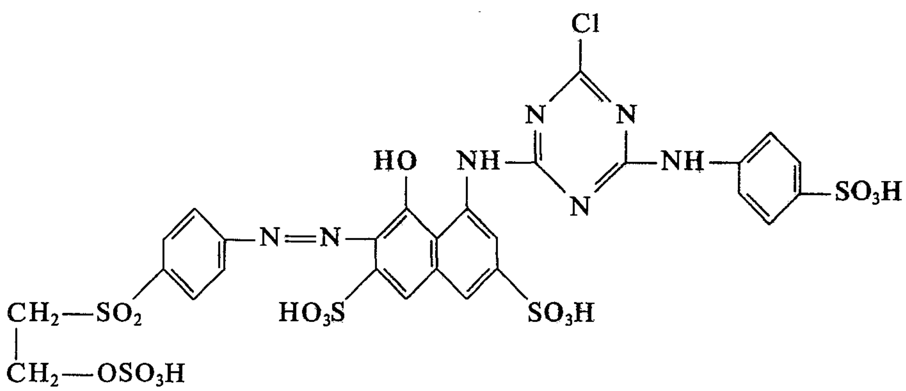

8. Azoverbindung nach Anspruch 1 der Formel (in Form der freien Säure geschrieben)

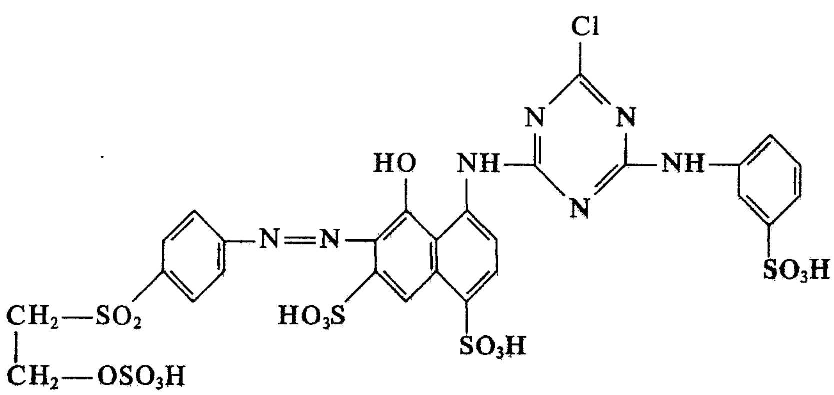

9. Azoverbindung nach Anspruch 1 der Formel (in Form der freien Säure geschrieben)

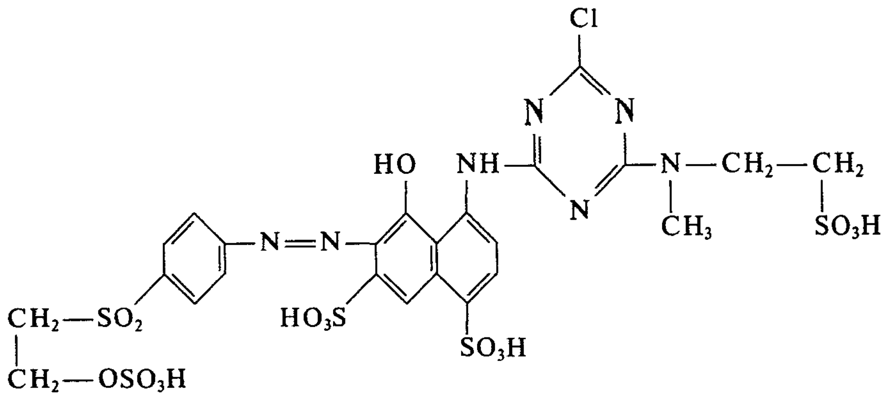

10. Azoverbindungen nach Anspruch 1 der allgemeinen Formel (in Form der freien Säure geschrieben)

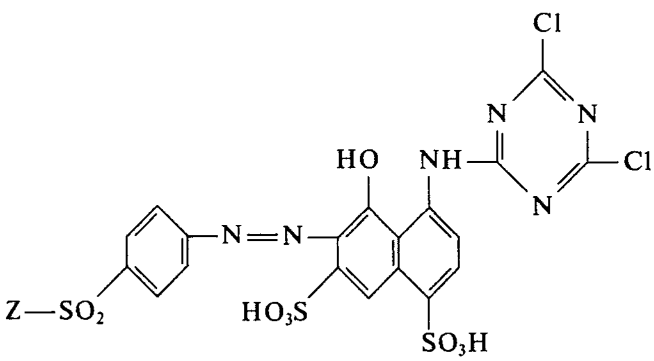

in welcher Z die in Anspruch 1 genannte Bedeutung hat.

11. Verwendung der in Anspruch 1 genannten und definierten Verbindungen der allgemeinen Formel (1) als Farbstoffe.

12. Verwendung nach Anspruch 11 zum Färben von hydroxy- und/oder carbonamidgruppenhaltigem Material.

**Claims**

1. Azo compounds which, written in the form of the free acid, have the general forlula (1)

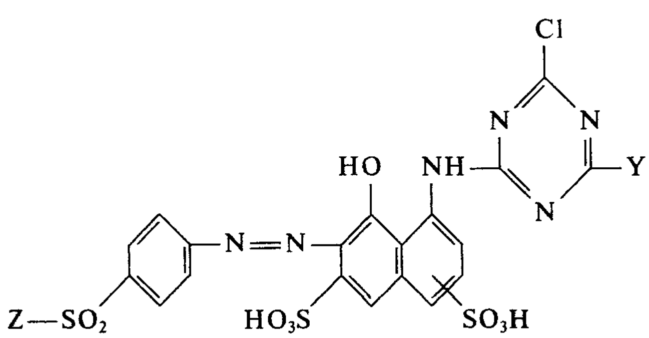

(1)

in which

Y is a chlorine atom or a radical of the formula

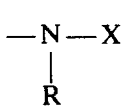

in which

R is a hydrogen atom or an alkyl group of 1 to 4 C-atoms and X is an alkyl group of 1 to 6 C-atoms which is substituted by a carboxylic acid group or a sulfonic acid group, or is the phenyl radical which is substituted by one or two sulfonic acid and/or carboxylic acid groups, and

Z is the vinyl, β-thiosulfatoethyl or β-sulfatoethyl group,

and in which the second sulfonic acid group in the naphthalene radical is bonded in m- or p-position relative to the amino group, this sulfo group standing mandatorily in the p-position if Y is chlorine.

2. Process for the preparation of the compounds of the general formula (1) mentioned and defined in claim 1, and of their salts, characterized by coupling the diazonium compound of an amine of the general formula (2)

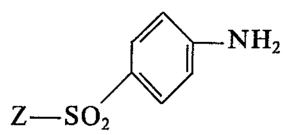

(2)

in which Z has the meaning mentioned in claim 1, with a compound of the general formula (3)

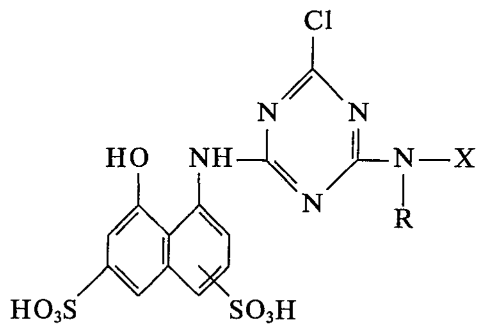

(3)

in which R and X have the meanings mentioned in claim 1 and the second sulfonic acid group in the naphthalene radical is in the m- or p-position relative to the amino group,
or coupling the diazonium compound of an amine of the general formula (2) mentioned and defined above, with a compound of the general formula (4)

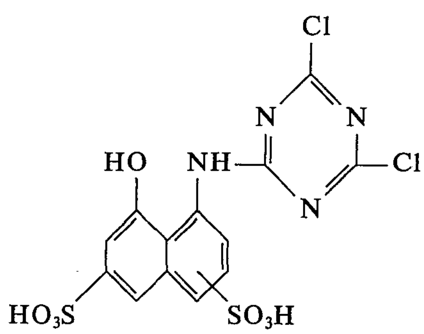

(4)

in which the second sulfonic acid group in the naphthalene radical is in the m- or p-position, if mandatory in the p-position, relative to the amino group, and optionally reacting the azo compound of the general formula (6)

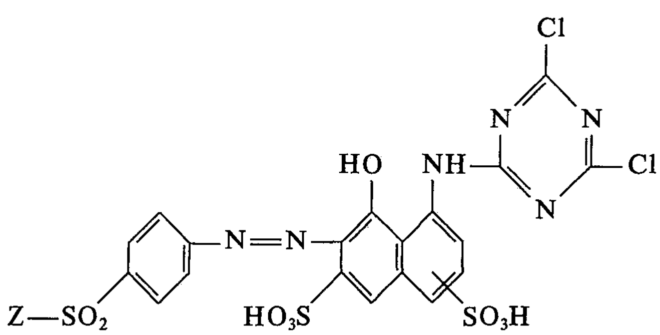

(6)

in which Z has the meaning mentioned in claim 1 and the second sulfonic acid group in the naphthalene radical is in the above-indicated position relative to the amino group, with a primary or secondary amine of the general formula (5)

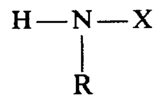

(5)

in which R and X have the meanings mentioned in claims 1.

3. Process for the preparation of compounds of the general formula (1) mentioned in claim 1, in which R and X have the meanings mentioned in claim 1, Z is the $\beta$-thiosulfatoethyl group and the second sulfonic acid group in the naphthalene radical is bonded in the m- or p-position relative to the amino group, characterized in that a compound of the general formula (1) in which Z is the vinyl group, is reacted with the salt of the thiosulfuric acid.

4. Azo compound according to claim 1 of the formula (written in the form of the free acid)

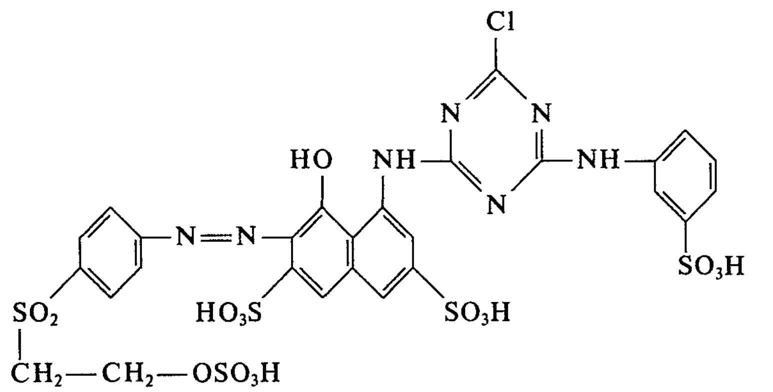

5. Azo compound according to claim 1 of the formula (written in the form of the free acid)

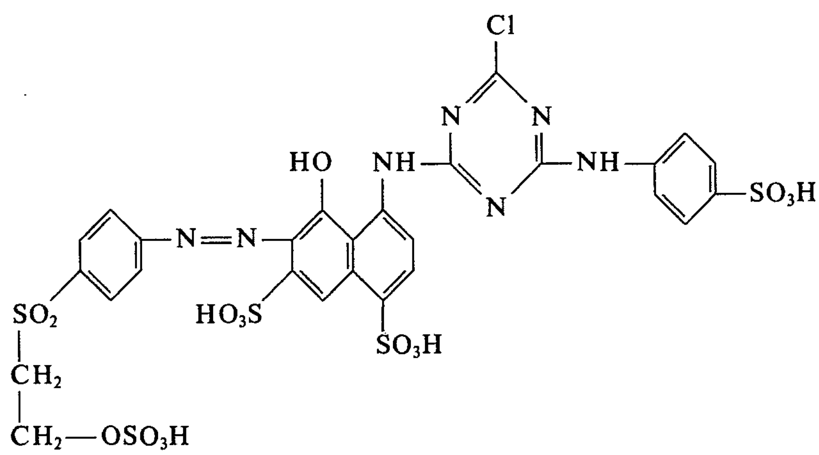

6. Azo compound according to claim 1 of the formula (written in the form of the free acid)

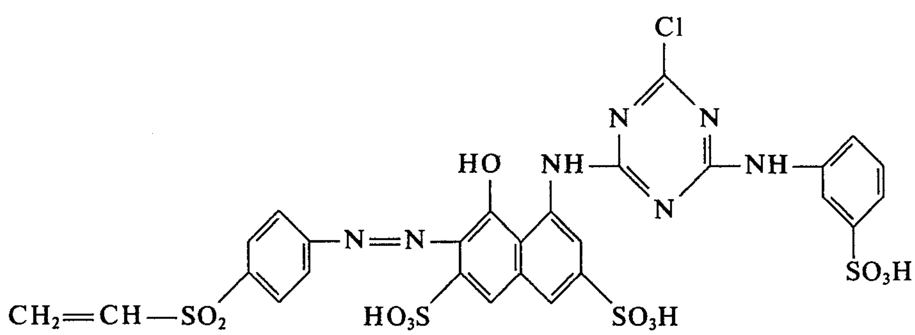

7. Azo compound according to claim 1 of the formula (written in the form of the free acid)

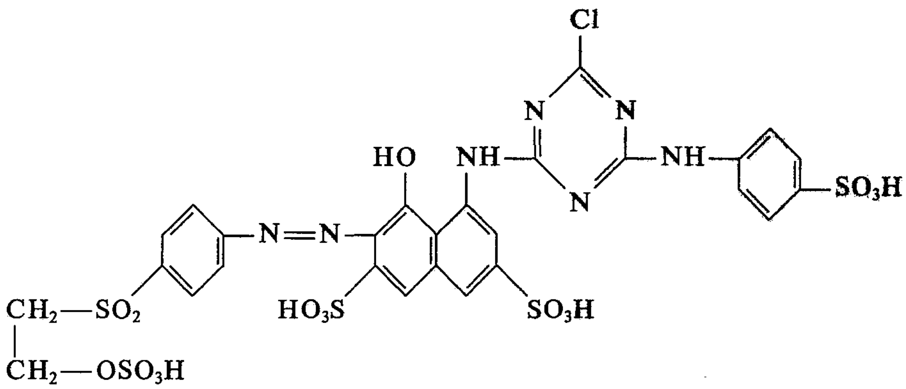

8. Azo compound according to claim 1 of the formula (written in the form of the free acid)

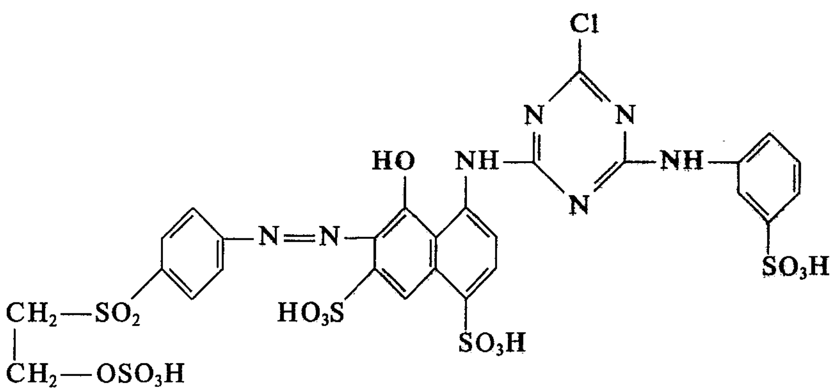

9. Azo compound according to claim 1 of the formula (written in the form of the free acid)

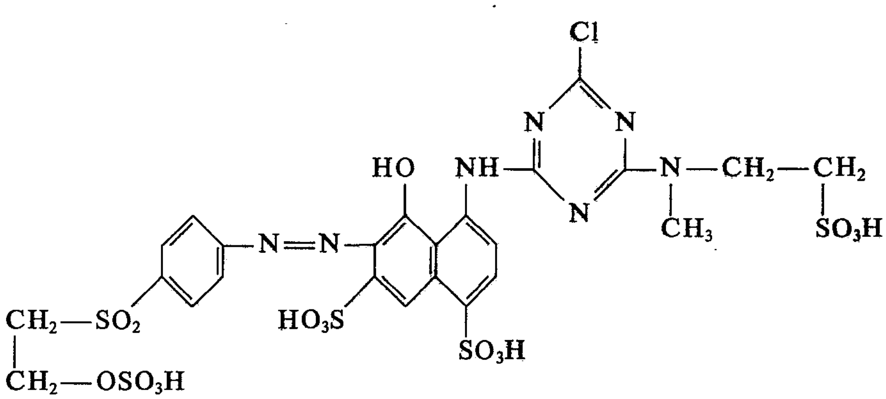

10. Azo compound according to claim 1 of the general formula (written in the form of the free acid)

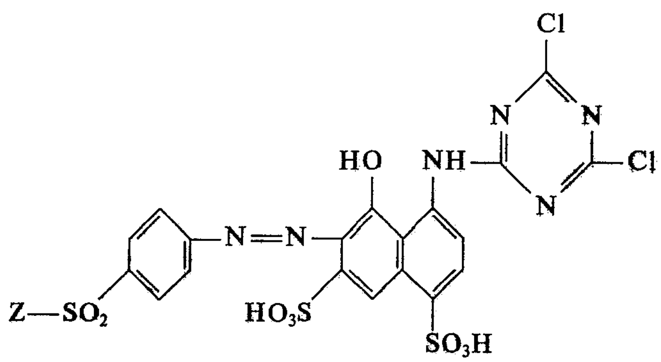

in which Z has the meaning mentioned in claim 1.

11. Use of the compounds of the general formula (1) mentioned and defined in claim 1, as dyestuffs.

12. Use according to claim 11 for coloring a material containing hydroxy and/or carbonamide groups.

**Revendications**

1. Composés azoïques qui, à l'état d'acides libres, répondent à la formule générale (1):

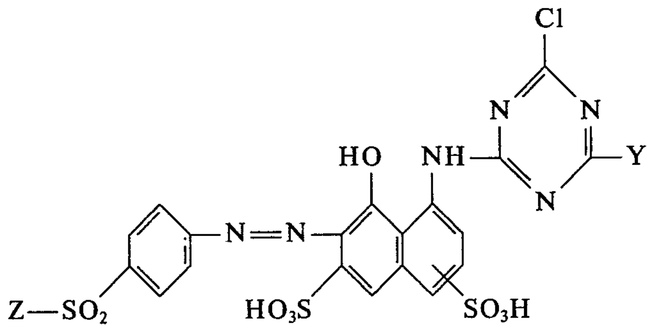

(1)

dans laquelle:

Y représente un atome de chlore ou un radical

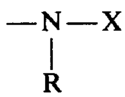

dans lequel R représente un atome d'hydrogène ou un radical alkyle contenant de 1 à 4 atomes de carbone et X représente un radical alkyle contenant de 1 à 6 atomes de carbone et portant un radical carboxy ou un radical sulfo, ou représente un radical phényle porteur d'un ou de deux radicaux sulfo et/ou carboxy, et

Z représente un radical vinyle, thiosulfato-2 éthyle ou sulfato-2 éthyle,

et dans laquelle le second radical sulfo présent sur le radical naphtalénique est en position méta ou en position para relativement au groupe amino, ce radical sulfo étant obligatoirement en position para dans le cas où Y désigne le chlore.

2. Procédé de préparation des composés de formule générale (1) et de leurs sels, mentionnés et définis à la revendication 1, procédé caractérisé en ce qu'on copule le dérivé diazoïque d'une amine répondant à la formule générale (2):

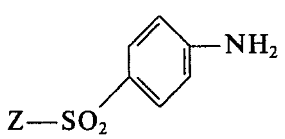

(2)

dans laquelle Z a la signification donnée à la revendication 1, avec un composé répondant à la formule générale (3):

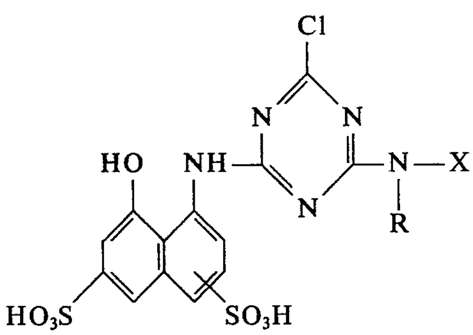

(3)

dans laquelle R et X ont les significations données à la revendication 1 et dans laquelle le second radical sulfo présent sur le noyau naphtalénique occupe la position méta ou la position para relativement au groupe amino, ou

on copule le dérivé diazoïque d'une amine répondant à la formule générale (2) mentionnée et définie ci-dessus avec un composé répondant à la formule générale (4):

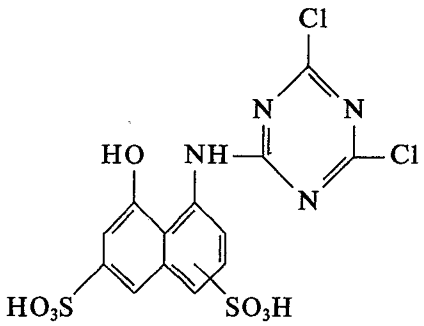

(4)

dans laquelle le second radical sulfo présent sur le noyau naphtalénique occupe la position méta ou la position para, si nécessaire la position para, relativement au groupe amino, et on fait éventuellement réagir le composé azoïque répondant à la formule générale (6):

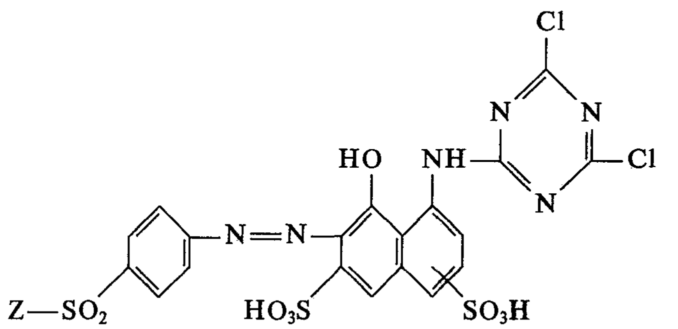

(6)

dans laquelle Z a la signification donnée à la revendication 1 et dans laquelle le second radical sulfo porté par le noyau naphtalénique occupe la position indiquée par rapport au groupe amino, avec une amine primaire ou secondaire répondant à la formule générale (5):

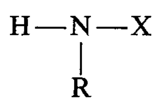

(5)

dans laquelle R et X ont les significations données à la revendication 1.

3. Procédé de préparation de ceux des composés de formule générale (1) qui ont été montionnés à la revendication 1 dans lesquels R et X ont les significations données à la revendication 1, Z représente un radical thiosulfato-2 éthyle, et le second radical sulfo présent sur le noyau naphtalénique occupe la position méta ou la position para relativement au groupe amino, procédé caractérisé en ce qu'on fait réagir un composé de formule générale (1) dans lequel Z représente un radical vinyle avec le sel de l'acide thiosulfurique.

4. Composé azoïque selon la revendication 1 qui, écrit sous la forme de l'acide libre, répond à la formule:

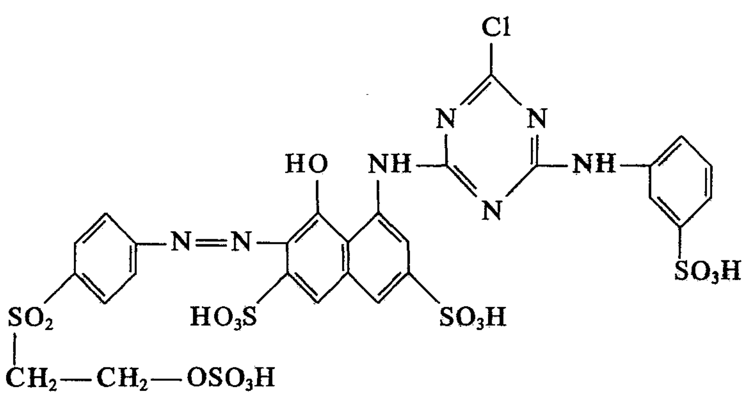

5. Composé azoïque selon la revendication 1 qui, écrit sous la forme de l'acide libre, répond à la formule:

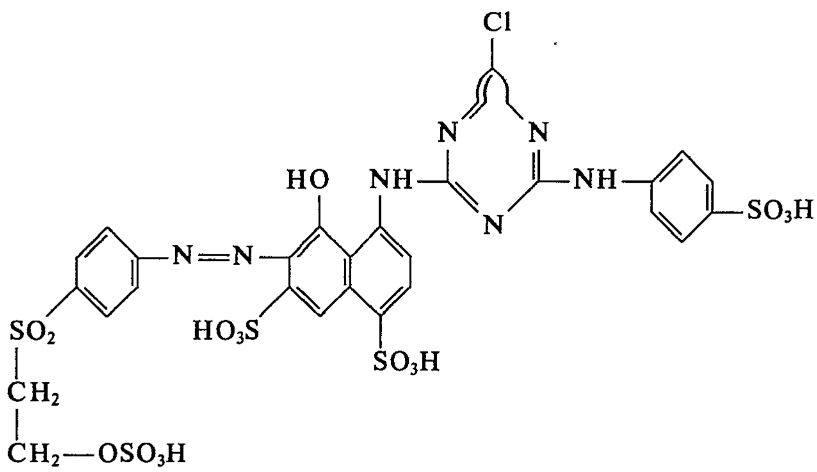

6. Composé azoïque selon la revendication 1 qui, écrit sous la forme de l'acide libre, répond à la formule:

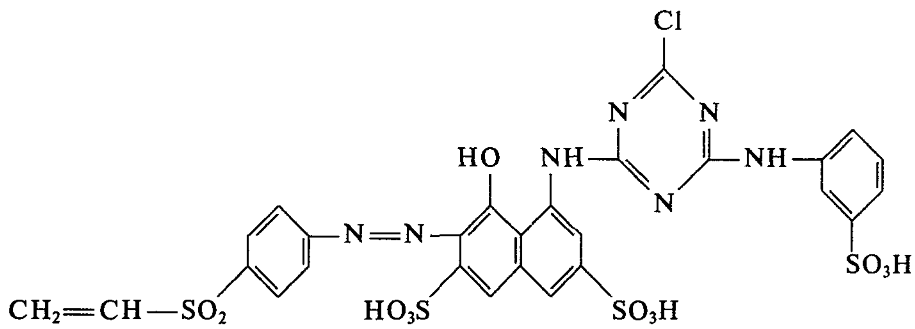

7. Composé azoïque selon la revendication 1 qui, écrit sous la forme de l'acide libre, répond à la formule:

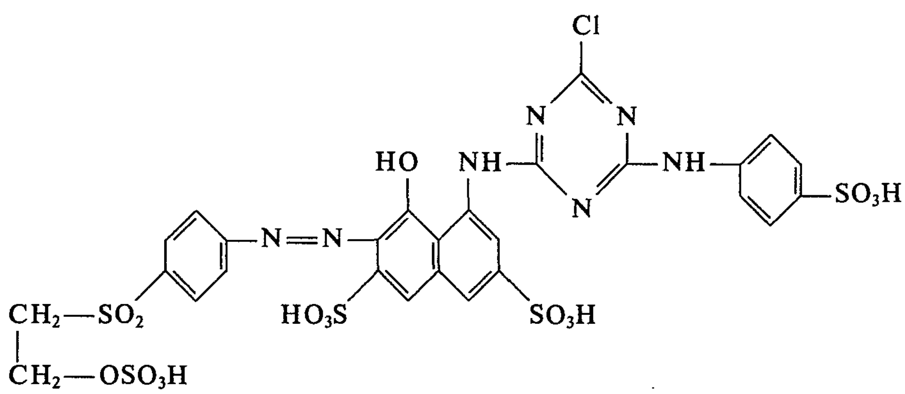

8. Composé azoïque selon la revendication 1 qui, écrit sous la forme de l'acide libre, répond à la formule:

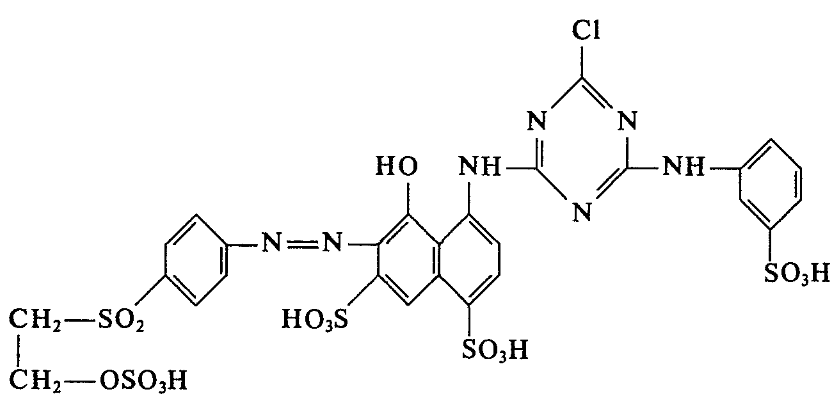

9. Composé azoïque selon la revendication 1 qui, écrit sous la forme de l'acide libre, répond à la formule:

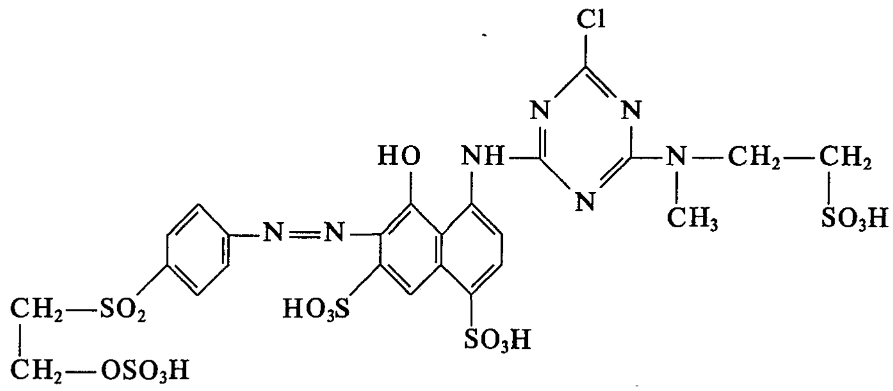

10. Composés azoïques selon la revendication 1 qui, à l'état d'acides libres, répondent à la formule générale:

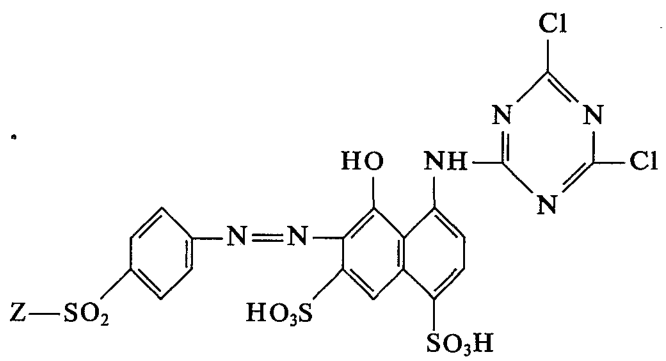

dans laquelle Z a la signification donnée à la revendication 1.

11. Application des composés de formule générale (1) qui ont été mentionnés et définis à la revendication 1 comme colorants.

12. Application selon la revendication 11 pour la teinture de matières contenant des groupes hydroxy et/ou des groupes carbamoyles.